# FASCICULE DE BREVET EUROPEEN

(11) **EP 3 056 435 B1**
(45) Date de publication et mention de la délivrance du brevet: **17.07.2019**
(21) Numéro de dépôt: 16151659.6
(22) Date de dépôt: 18.01.2016
(51) Int. Cl.: B64F 1/12, A63H 27/00

(54) **DISPOSITIF DE MAINTIEN ET LIBÉRATION D'UN ENGIN TÉLÉOPÉRÉ**
HALTE- UND LÖSEVORRICHTUNG EINES FERNGESTEUERTEN GERÄTS
DEVICE FOR HOLDING AND RELEASING A REMOTELY OPERATED VEHICLE

(30) Priorité: 23.01.2015 FR 1500146
(43) Date de publication de la demande: 17.08.2016
(73) Titulaire: NEXTER Systems, 42328 Roanne (FR)
(72) Inventeur: PETITDIDIER, Benoît, 18023 BOURGES (FR)
(74) Mandataire: Cabinet Chaillot

(56) Documents cités:
- EP-A2- 2 218 642
- WO-A1-2007/141795
- WO-A1-2014/160589
- US-A- 3 552 688
- US-A- 4 834 321
- US-A- 5 003 725

## Description

Le domaine technique de l'invention est celui des dispositifs permettant le maintien d'un engin téléopéré sur un véhicule ainsi que sa libération.

Par engin téléopéré on comprend aussi bien les engins volants (ou drones), que les engins terrestres (ou robots).

Ces engins sont aujourd'hui mis en oeuvre sur un théâtre d'opérations à partir de véhicules. Les engins doivent pouvoir être facilement libérés et tout aussi facilement récupérés.

Il est connu de rendre les engins volants solidaires d'une plateforme portée par le véhicule à l'aide d'un câble. Il est alors aisé de récupérer l'engin en enroulant le câble. Les brevets WO2007141795 et US2004167682 A1 décrivent un tel dispositif de maintien et de libération d'un engin volant. Il est connu de EP 2 218 642 un dispositif de lancement et de récupération d'un engin volant. Il est connu de US 4 834 321 un dispositif de maintien d'hélicoptère sur une plateforme.

Cependant on cherche aujourd'hui à mettre en oeuvre des engins qui ne restent pas reliés physiquement à leur plateforme donc au véhicule au cours de leur mission. Il se pose alors le problème du maintien de l'engin sur la plateforme portée par le véhicule en dehors des phases d'utilisation ainsi que celui de sa libération de la plateforme, donc du véhicule, d'une façon simple et rapide à partir de l'intérieur d'un véhicule.

Ainsi l'invention a pour but de proposer un dispositif simple et rustique permettant de maintenir un engin sur un véhicule et de le libérer.

Le dispositif selon l'invention permet aussi de faciliter la récupération de l'engin à l'issue de la mission en aidant à son positionnement par rapport à la plateforme portée par le véhicule.

En effet aujourd'hui, en particulier pour les engins volants téléopérés, les solutions permettant de récupérer l'engin mettent en oeuvre des filets de capture ou bien des câbles qui sont accrochés par l'engin volant à l'approche de sa plateforme.

Le brevet US8453967 décrit ainsi un dispositif mettant en oeuvre un filet pour récupérer un engin volant. Ces solutions sont complexes et encombrantes.

Il n'est pas possible d'assurer la récupération d'un engin volant autonome et de petite taille sur une plateforme de taille également réduite sans mettre en place un dispositif de guidage. Or les dispositifs de guidage par satellite actuels ont une erreur de positionnement qui n'est pas inférieure à 100 millimètres, ce qui est trop important.

L'invention permet de faciliter le positionnement de l'engin par rapport à une plateforme portée par le véhicule, donc facilite aussi sa récupération à partir de l'intérieur d'un véhicule sans intervention manuelle directe d'un opérateur sur l'engin.

Ainsi l'invention a pour objet un dispositif de maintien et libération d'un engin téléopéré sur un véhicule, le dispositif comportant une plateforme apte à être portée par le véhicule, dispositif caractérisé en ce qu'il comprend au moins deux lames fixées sur la plateforme par une de leurs extrémités, les lames délimitant entre elles un espace de réception à l'intérieur duquel l'engin est destiné à se positionner dans sa totalité, l'espace de réception étant tel que, lors de l'utilisation du dispositif avec l'engin, la totalité de l'engin se loge à l'intérieur de l'espace de réception, chaque lame étant reliée à un moyen de manoeuvre permettant d'écarter ou de rapprocher les extrémités libres des lames pour retenir l'engin dans l'espace de réception ou le libérer.

Selon un mode de réalisation, le moyen de manoeuvre pourra avoir pour effet d'écarter les extrémités libres des lames pour libérer l'engin.

Les lames pourront ainsi être des lames souples qui seront à l'état de repos rapprochées les unes des autres de

La plateforme peut comporter une partie fixe sur laquelle sont fixées les lames et une partie mobile qui est destinée à recevoir l'engin et peut se déplacer par rapport à la partie fixe, le moyen de manoeuvre comportant la partie mobile de la plateforme dont un bord externe provoque lors de son déplacement l'écartement élastique des lames.

Selon un autre mode de réalisation, les lames pourront être des lames souples et le moyen de manoeuvre pourra comprendre au moins un moyen de traction relié à chaque lame au voisinage de son extrémité libre, le moyen de traction provoquant lorsqu'il est actionné le passage d'une première position dans laquelle la lame n'est pas déformée à une seconde position dans laquelle la lame est déformée par flexion et comporte alors une partie bombée qui s'introduit dans l'espace de réception de façon à pouvoir venir en appui contre l'engin.

Le moyen de traction pourra comporter au moins un câble solidaire de chaque lame, câble dont une extrémité sera reliée à un moyen d'entraînement.

Le moyen d'entraînement pourra comprendre au moins un tambour enrouleur.

Le ou les tambours enrouleurs pourront avantageusement être coaxiaux et disposés à égales distances des différentes lames.

Selon une variante, le moyen d'entraînement pourra comprendre un coulisseau auquel seront fixés les câbles et qui pourra se translater suivant une direction perpendiculaire à la plateforme.

Avantageusement, le dispositif pourra comprendre de quatre à huit lames régulièrement réparties angulairement.

Les lames pourront être conductrices ou bien recouvertes d'un matériau conducteur au niveau de leur partie qui est destinée à venir en contact avec un dépôt conducteur complémentaire porté par l'engin.

La face supérieure de la plateforme pourra par ailleurs comporter au moins un revêtement conducteur destiné à coopérer avec un contact porté par l'engin.

D'autres avantages apparaîtront à la lecture de la description qui va suivre de modes particuliers de réalisation, description faite en référence aux dessins annexés et dans lesquels :
- Les figures 1a et 1b sont deux vues d'un exemple d'engin volant pouvant être maintenu et libéré par un dispositif selon l'invention ;
- La figure 2 est un schéma montrant l'approche par un engin volant d'une plateforme d'un dispositif selon l'invention ;
- Les figures 3a et 3b sont deux vues latérales schématiques d'un premier mode de réalisation d'un dispositif selon l'invention, la figure 3a montrant l'engin à l'approche de la plateforme et la figure 3b montrant l'engin maintenu sur la plateforme ;
- La figure 4 montre un exemple d'un moyen de manoeuvre adapté à ce premier mode de réalisation ;
- Les figures 5a, 5b et 5c sont trois vues latérales schématiques d'un deuxième mode de réalisation d'un dispositif selon l'invention, la figure 5a montrant l'engin à l'approche de la plateforme, la figure 5b montrant l'engin maintenu sur la plateforme et la figure 5c montrant la libération de l'engin par la plateforme ;
- Les figures 6a et 6b sont deux vues latérales schématiques d'un troisième mode de réalisation d'un dispositif selon l'invention, la figure 6a montrant l'engin positionné sur la plateforme dans une position libérée et la figure 6b montrant l'engin maintenu sur la plateforme ;
- Les figures 7a et 7b sont deux vues latérales schématiques d'une variante de ce troisième mode de réalisation d'un dispositif selon l'invention, la figure 7a montrant l'engin positionné sur la plateforme dans une position libérée et la figure 7b montrant l'engin maintenu sur la plateforme ;
- La figure 8 est une vue de dessus d'un mode de réalisation d'un dispositif selon l'invention ;
- Les figures 9a et 9b sont deux vues schématiques d'un quatrième mode de réalisation d'un dispositif selon l'invention, adapté à un engin de type robot à roues, la figure 9a montrant l'engin positionné sur la plateforme dans une position libérée et la figure 9b montrant l'engin maintenu sur la plateforme.

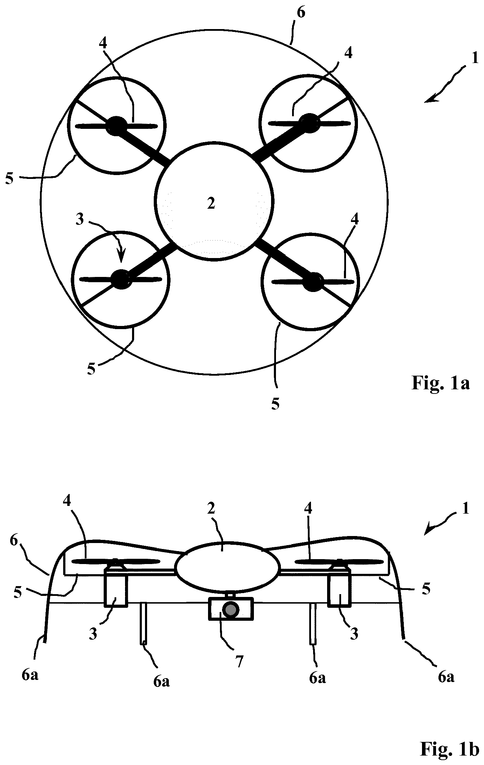

Les figures 1a et 1b montrent un engin volant téléopéré 1 de type quadricoptère. Cet engin comporte une cellule 2 qui porte quatre petits moteurs électriques 3 entraînant chacun une hélice 4. Chaque hélice 4 est entourée d'un carénage de protection 5 et une jupe 6 entoure les carénages 5 et porte des pieds d'atterrissage 6a.

Cet exemple est dessiné ici de façon très schématique. Il ne fait pas partie de l'invention et a pour seul but de permettre de décrire la coopération de l'engin avec le dispositif de maintien et libération selon l'invention.

La cellule 2 renferme des moyens (non représentés) permettant d'assurer la téléopération de l'engin 1 : un émetteur / récepteur radio permettant le dialogue avec un pupitre de télécommande, un moyen de localisation par satellite (GPS), des batteries électriques. Elle porte aussi une caméra 7 orientable ainsi que des motoréducteurs d'orientation de celle-ci. Ces différents moyens ne sont pas détaillés.

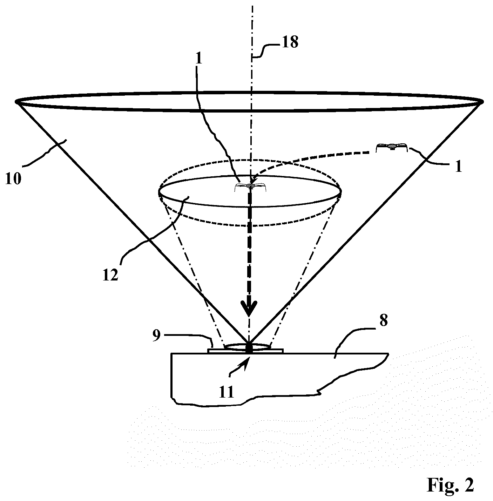

La figure 2 schématise le mode de commande d'un engin 1 à partir d'un véhicule 8 sur lequel est positionnée une plateforme 9 du dispositif selon l'invention. La plateforme 9 est bien entendu fixée au véhicule par des moyens de liaison appropriés.

Le véhicule 8 n'est pas représenté en détail. Il pourra s'agir d'un engin blindé ou bien d'un véhicule terrestre destiné aux forces de sécurité ou d'un véhicule terrestre civil. Le véhicule pourra aussi être un navire civil ou militaire.

On a représenté par un cône 10 le champ d'observation d'une caméra 11 de contrôle d'approche qui est solidaire de la plateforme. Ce champ 10 est choisi relativement large (demi angle au sommet du cône 10 de l'ordre de 45°).

On a représenté par un ellipsoïde 12 un volume dit de transition qui correspond au volume dans lequel il est possible de positionner un engin volant de façon automatique à l'aide des moyens de positionnement par satellites connus à ce jour. L'incertitude sur le positionnement de l'engin 1 est de l'ordre d'une centaine de millimètres suivant les trois directions de l'espace. Il est donc possible d'amener de façon automatique l'engin dans le volume de transition 12 et l'engin 1 est alors visible par la caméra 11.

Une fois l'engin 1 visible par la caméra 11, un opérateur humain logé dans le véhicule 8 prend en charge la descente contrôlée de l'engin 1 vers la plateforme 9.

La fin de la descente de l'engin 1 sera contrôlée et sécurisée par le dispositif de maintien selon l'invention .

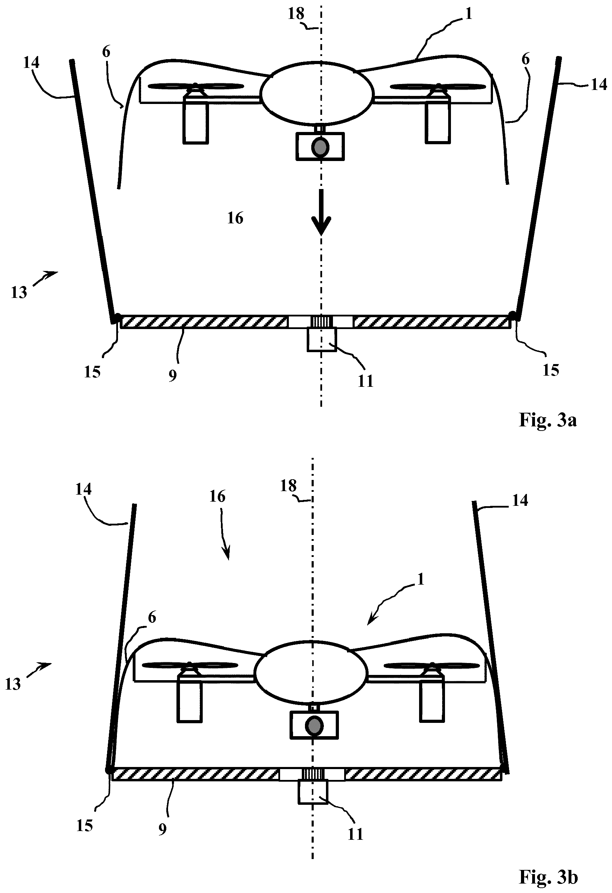

Les figures 3a et 3b montrent de façon schématique un premier mode de réalisation d'un dispositif de maintien et libération 13 selon l'invention.

Le dispositif 13 comprend au moins deux lames 14 qui sont fixées sur la plateforme 9 par une de leurs extrémités.

Les lames 14 sont ici liées à la plateforme 9 par des articulations 15. Les lames 14 délimitent entre elles un espace de réception 16 à l'intérieur duquel l'engin 1 est destiné à se positionner. On notera que la totalité de l'engin 1 se loge à l'intérieur de l'espace de réception 16.

Chaque lame 14 est par ailleurs reliée à un moyen de manoeuvre (non visible sur les figures 3a et 3b) qui permet d'écarter ou de rapprocher les extrémités libres des lames 14.

Suivant ce mode de réalisation, on voit à la figure 3a que, lorsque les lames 14 ont leurs extrémités écartées, l'entrée de l'espace de réception 16 est largement ouverte et l'engin 1 peut descendre pour se poser sur la plateforme 9.

Inversement, on voit à la figure 3b que, lorsque les lames 14 ont leur extrémités rapprochées, elles retiennent l'engin 1 dans l'espace de réception 16. En effet la totalité de l'engin 1 se loge à l'intérieur de l'espace de réception 16.

Plus précisément, suivant ce mode de réalisation, les lames 14 sont relativement rigides et, lorsqu'elles sont rapprochées les unes des autres, elles viennent en appui contre la surface externe de la jupe 6 du carénage.

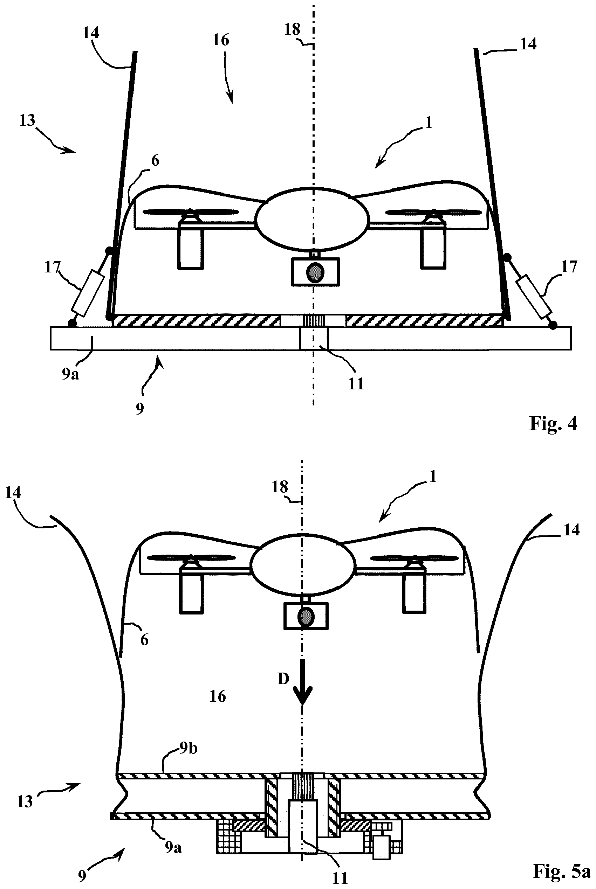

La figure 4 montre un exemple de réalisation d'un moyen de manoeuvre 17 des lames 14. Le moyen de manoeuvre 17 comprend ici deux petits vérins linéaires 17 qui sont fixés par une extrémité à une embase 9a de la plateforme 9 et par leur autre extrémité à la lame 14 considérée.

L'amplitude du mouvement de pivotement des lames 14 d'une position à l'autre est relativement réduite : de l'ordre de 20°. Les actionneurs ont donc une course également réduite.

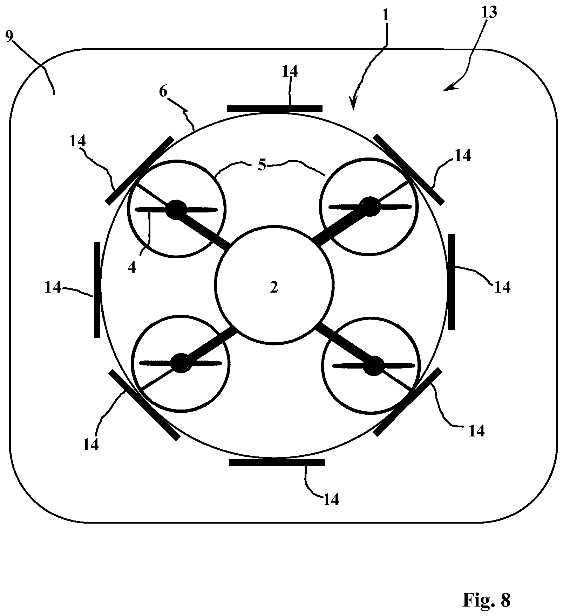

On n'a représenté sur les figures 3a et 3b que deux lames 14. Compte tenu de la forme globalement cylindrique du profil externe de l'engin 1, il sera avantageux de prévoir un plus grand nombre de lames 14 régulièrement réparties angulairement autour d'un axe 18 de la plateforme 9, qui est ici l'axe d'observation de la caméra de contrôle d'approche 11 (axe 18 du cône d'observation 10). La figure 8 montre ainsi en vue de dessus un engin 1 qui est maintenu par huit lames 14 régulièrement réparties angulairement autour de l'axe 18. Le nombre des lames et leur répartition sur la plateforme 9 dépendra de la forme de l'engin 1 que la plateforme 9 équipée des lames 14 vise à maintenir et libérer.

A titre de variante il serait possible de prévoir des lames 14 réalisées en un matériau élastique, lames qui seraient fixées à la plateforme de façon rigide (sans articulation).

Dans ce cas la position naturelle des lames au repos sera celle de la figure 3a : lames 14 avec leurs extrémités libres écartées pour libérer l'engin. Le moyen de manoeuvre sera alors par exemple constitué par des parois mobiles en translation, perpendiculaires à la plateforme 9, et qui coulissent le long des lames 14 au voisinage de leur bord inférieur fixe. Ces parois en se déplaçant vers le haut vont ramener les lames 14 perpendiculairement à la plateforme 9 et donc rapprocher leurs extrémités libres.

On pourra alors prévoir un bec sur chaque lame qui se positionnera au-dessus de l'engin 1 et empêchera son extraction lorsque les lames 14 seront dans leur position finale, toutes perpendiculaires à la plateforme 9.

Lorsque le dispositif comprend plusieurs lames 14 régulièrement réparties angulairement (comme montré à la figure 8), les parois mobiles pourront être constituées par une simple douille cylindrique qui se déplacera par rapport à la plateforme 9 et qui déplacera simultanément toutes les lames 14.

Les figures 5a à 5c montrent un deuxième mode de réalisation d'un dispositif de maintien selon l'invention.

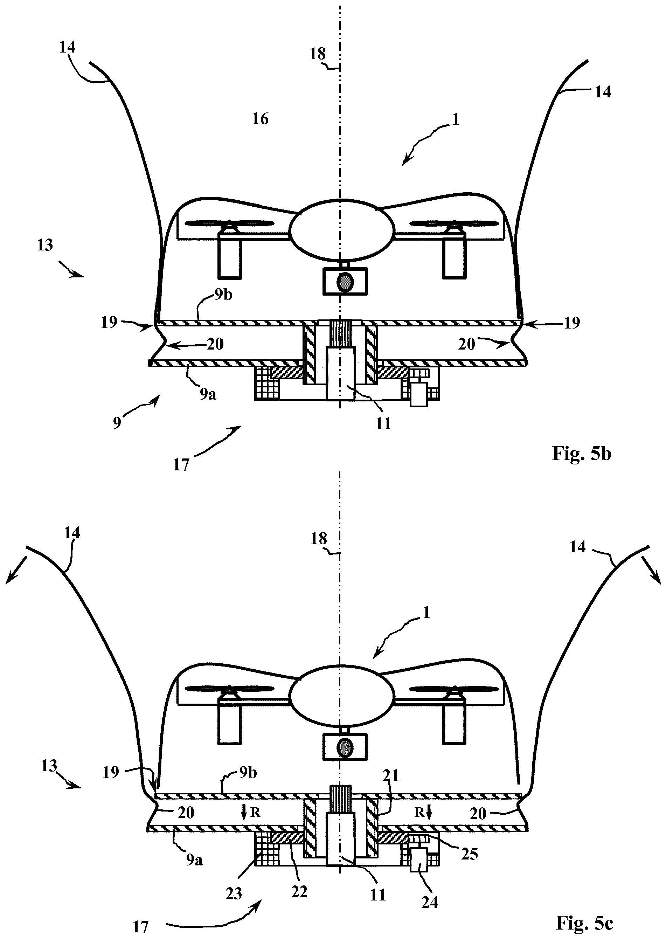

Suivant ce mode de réalisation, les lames 14 sont des lames souples (par exemple en tôle à ressort) qui sont à l'état de repos (représenté figure 5a) rapprochées les unes des autres, ce qui permettra de maintenir l'engin 1 dans l'espace de réception 16 (figure 5b), par la déformation élastique des lames.

Comme on le voit à la figure 5a, les lames 14 sont dans cette position rapprochée lorsque l'engin 1 est dans un mouvement de descente D. Au cours de ce mouvement de descente, la jupe 6 de l'engin va venir en contact avec les lames 14 qui par élasticité vont s'écarter pour permettre la descente de l'engin 1 jusqu'à la plateforme 9.

Les lames 14 jouent ainsi le rôle d'un amortisseur des chocs lors de la descente de l'engin 1.

Le profil des lames 14 est défini de telle sorte que, une fois l'engin 1 arrivé au contact de la plateforme 9 (figure 5b), les lames 14 vont retrouver une position avec leurs extrémités rapprochées et vont venir en appui contre la surface externe de la jupe 6 de l'engin 1. La raideur des lames est choisie de façon à assurer alors un maintien fiable de l'engin sur la plateforme 9, à l'intérieur de l'espace de réception 16.

Pour libérer l'engin 1 afin de permettre son décollage, il est nécessaire d'écarter les lames 14.

Pour cela la plateforme 9 est formée de deux parties : une partie fixe 9a sur laquelle sont fixées les lames 14 et une partie mobile 9b qui reçoit l'engin 1 et qui peut se déplacer par rapport à la partie fixe 9a.

Le moyen de manoeuvre 17 comprend alors la partie mobile 9b de la plateforme 9 qui va pouvoir se rapprocher de la partie fixe 9a (flèche R figure 5c) lors d'un mouvement de libération de l'engin.

Lors de ce mouvement R, le bord externe cylindrique 19 de la partie mobile 9b de la plateforme 9 vient en appui contre une ondulation 20 de chaque lame 14. Cet appui provoque l'écartement élastique des lames 14 et la libération de l'engin. Les lames 14 retrouveront leur position initiale (figure 5a) lorsque la partie mobile 9b aura repris sa position écartée de la partie fixe.

Pour définir complétement le moyen de manoeuvre 17, il est donc simplement nécessaire de définir un moyen permettant de rapprocher les deux parties 9a et 9b de la plateforme 9.

On a représenté sur les figures d'une façon schématique et à titre de simple exemple illustratif un moyen mécanique permettant le rapprochement des deux parties de la plateforme 9. Ce moyen comprend une tige filetée 21 solidaire de la partie mobile 9b de la plateforme. Cette tige filetée 21 est par ailleurs interdite de rotation par exemple par une goupille fixe circulant dans une rainure parallèle à l'axe 18 de la plateforme (et de la tige 21), rainure non représentée.

La tige filetée 21 coopère avec un écrou 22 qui est immobilisé en translation par un boîtier 23 solidaire de la partie fixe 9a de la plateforme 9. L'écrou 22 peut tourner dans son logement du boîtier 23, sa rotation est commandée par un moteur électrique 24 qui fait pivoter l'écrou grâce à un pignon 25 qui engrène sur une denture périphérique de l'écrou 22.

L'écrou 22 ne pouvant se translater, la rotation de l'écrou 22 entraînera la translation de la tige filetée 21, donc de la partie mobile 9b de la plateforme 9.

Bien entendu cet exemple de réalisation n'a rien de limitatif. Il serait par exemple possible de rendre la tige filetée 21 solidaire de la tige d'un vérin linéaire qui commandera alors la translation de la partie mobile 9b de la plateforme 9.

On a représenté sur les figures 5a à 5c la caméra de contrôle d'approche 11 orientée comme dans les modes de réalisation précédents suivant l'axe 18 de la plateforme. Cette caméra sera par exemple montée de façon fixe par rapport à la tige filetée 21.

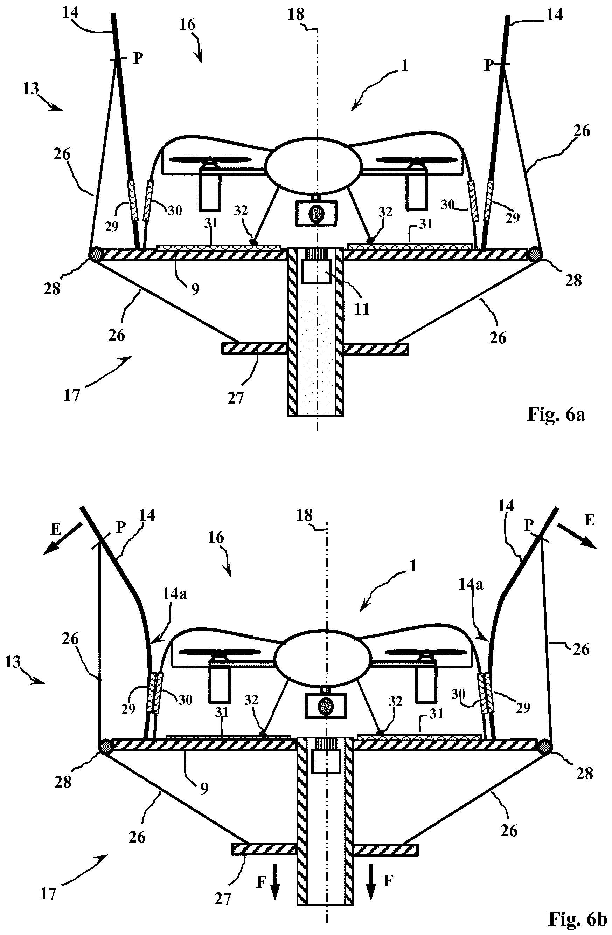

Les figures 6a et 6b montrent de façon schématique un troisième mode de réalisation de l'invention.

Suivant ce mode de réalisation, les lames 14 sont des lames souples et le moyen de manoeuvre 17 comprend au moins un moyen de traction 26 qui est un câble fixé à chaque lame 14 au niveau d'un point P voisin de son extrémité libre.

Il y a ici un câble 26 attaché à chaque lame 14. Le dispositif comporte comme les précédents un nombre de lames 14 supérieur ou égal à deux et qui est avantageusement compris entre quatre et huit. La figure 8 montre en vue de dessus un dispositif à huit lames.

Les câbles 26 sont tous reliés à un moyen d'entraînement commun 27 qui est schématisé ici par un coulisseau 27. Des poulies 28 assurent le renvoi de chaque câble 26 pour le diriger vers sa lame 14.

Le coulisseau 27 peut être déplacé en translation parallèlement à l'axe 18 de la plateforme (flèches F sur la figure 6b). Le déplacement pourra par exemple être commandé par un vérin linéaire (non représenté) auquel sera fixé le coulisseau 27.

Comme on le voit sur la figure 6b, lorsque le coulisseau 27 est déplacé vers le bas (suivant la flèche F), les moyens de traction 26 déforment les lames 14 dont l'extrémité libre s'écarte vers l'extérieur (flèches E).

Les lames 14 passent ainsi d'une première position (représentée figure 6a) dans laquelle les lames ne sont pas déformées à une seconde position (représentée figure 6b) dans laquelle les lames 14 sont déformées élastiquement par flexion.

Chaque lame 14 comporte alors une partie bombée 14a qui s'introduit dans l'espace de réception 16 et vient en appui contre l'engin 1, assurant ainsi son immobilisation par rapport à la plateforme 9.

Ainsi, contrairement aux modes précédents, suivant ce mode de réalisation, lorsque les extrémités libres des lames 14 sont écartées les unes des autres (figure 6b), l'engin 1 est retenu dans sa totalité dans l'espace de réception 16.

Inversement, lorsque les extrémités libres des lames 14 sont rapprochées (figure 6a) l'engin est libéré et peut sortir de l'espace de réception.

Bien entendu, comme on le voit sur la figure 6a, la position de repos initiale, dans laquelle les lames sont rapprochées les unes des autres et ne sont donc pas fléchies, est une position dans laquelle les lames 14 sont cependant toutes orientées vers l'extérieur de l'espace 16, avec ici un angle de l'ordre de 15° par rapport à la verticale.

Les lames 14 ne gênent donc absolument pas la descente de l'engin 1 dans l'espace 16. La souplesse des lames 14 assure par ailleurs un amortissement des chocs communiqués par l'engin 1.

On remarque sur les figures que chaque lame 14 comporte un dépôt 29 d'un matériau conducteur au niveau de leur partie qui est destinée à venir en contact avec l'engin 1. Ce dépôt 29 coopère avec un dépôt conducteur complémentaire 30 qui est porté par la jupe 6 de l'engin 1.

Les dépôts conducteurs 29, 30 sont en contact lorsque le coulisseau 27 a été déplacé vers le bas, donc dans la position de maintien de l'engin 1 dans l'espace de réception 16 (figure 6b).

On remarque aussi que la face supérieure de la plateforme 9 comporte au moins un revêtement conducteur 31 destiné à coopérer avec un contact 32 porté par l'engin 1.

Les dépôts conducteurs 29 des lames 14 ainsi que le revêtement conducteur 31 de la plateforme 9 sont reliés à un générateur électrique.

Au niveau de l'engin 1, les dépôts conducteur 30 et les contacts 32 sont reliés aux batteries de l'engin 1.

Ainsi lorsque l'engin est positionné et immobilisé sur la plateforme 9, la recharge des batteries de l'engin 1 peut être réalisée.

A titre de variante il est possible de mettre en oeuvre des lames 14 qui sont réalisées intégralement en un matériau conducteur, par exemple un acier à ressort ou un composite à base de fibres de carbone.

Il est clair que des dépôts conducteurs sur les lames 14 peuvent également être prévus dans les modes de réalisation précédents (figures 3a à 5c), ainsi qu'un revêtement conducteur sur la plateforme 9.

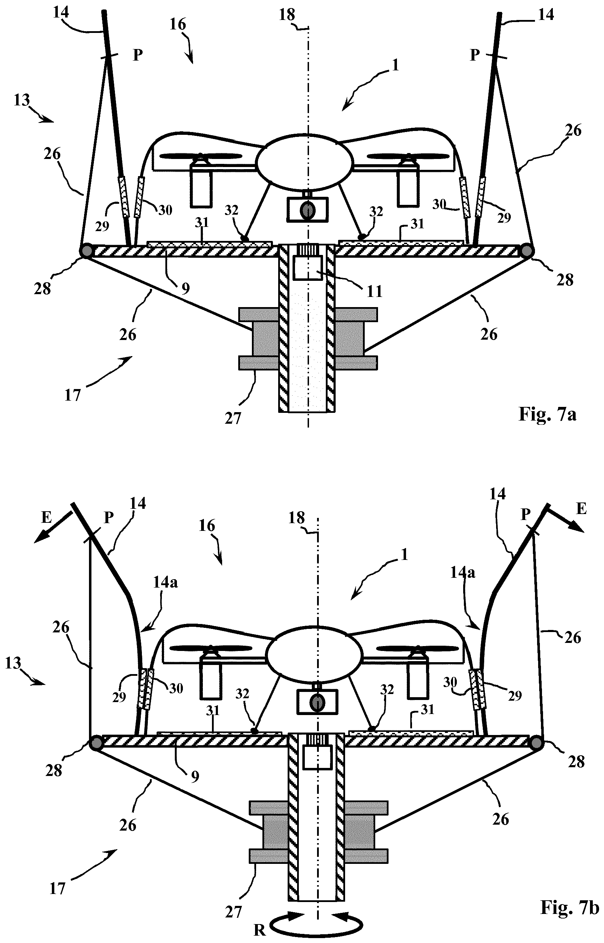

Les figures 7a et 7b montrent une variante de réalisation de ce troisième mode, variante qui ne diffère de la précédente que par la nature du moyen d'entraînement 27 qui est ici réalisé sous la forme d'un tambour enrouleur. Le tambour 27 peut être entraîné en rotation R autour de l'axe 18 de la plateforme 9 par une motorisation non représentée.

Tous les câbles 26 sont fixés au tambour 27 qui comportera par exemple des encoches associées à chaque câble. La rotation R du tambour 27 enroulera simultanément sur ce dernier tous les câbles 26, provoquant ainsi la traction des extrémités des lames 14 et la déformation de ces dernières (figure 7b).

On a représenté ici un seul tambour 27 recevant tous les câbles 26. Il est possible de prévoir un tambour enrouleur par câble. Les différents tambours enrouleurs pourront être coaxiaux autour de l'axe 18, donc disposés à égales distances des différentes lames.

Il est possible aussi de disposer chaque tambour enrouleur sur le plateau 9, par exemple à la place des poulies 28. Mais une telle solution est plus complexe et coûteuse.

L'invention a été décrite dans son application au maintien et à la libération d'un engin volant à partir d'un véhicule. Elle peut être aussi mise en oeuvre pour le maintien et la libération d'un engin roulant terrestre à partir d'un véhicule.

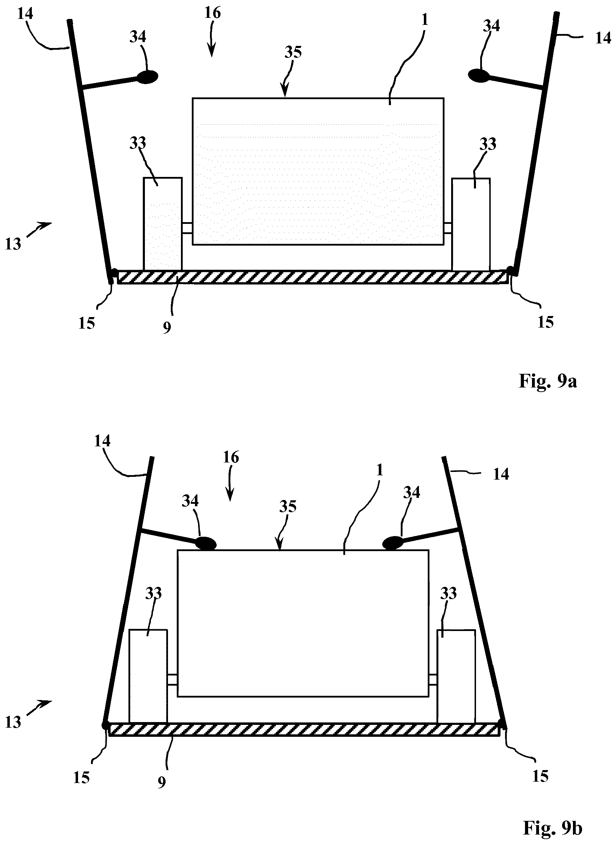

A titre d'exemple les figures 9a et 9b montrent un engin 1 qui est un robot comportant des roues 33. Les lames 14 sont disposées de part et d'autre d'une plateforme 9 qui est elle même liée au véhicule par des moyens non représentés et elles sont liées à la plateforme 9 par des articulations 15. Un moyen de manoeuvre non représenté (par exemple du type des vérins représentés à la figure 4) permet de commander le pivotement des lames 14.

Les lames 14 délimitent un espace de réception 16 qui reçoit l'engin 1 dans sa totalité. La plateforme 9 est ici rectangulaire et il y a deux lames 14, chacune d'elle étant disposée le long d'un bord de la plateforme 9.

Comme on le voit à la figure 9b, lorsque les lames 14 sont pivotées, elles viennent en appui contre l'engin 1 pour le maintenir. A cet effet les lames 14 portent au voisinage de leur extrémité des doigts 34 qui viennent s'appliquer sur une surface supérieure 35 de l'engin 1.

Les doigts 34 pourront avantageusement porter des contacts électriques qui permettront de relier des batteries de l'engin à une source électrique permettant leur rechargement.

Il est bien évident que la plateforme 9 sera disposée à proximité du sol pour permettre à l'engin de monter sur elle. Il sera possible pour cela de rendre la plateforme 9 solidaire d'un bras articulé porté par le véhicule et permettant de la rapprocher du sol. Le brevet EP1837234 décrit des exemples de moyens permettant d'amener une plateforme portant un engin au voisinage du sol.

A titre de variante il est là encore possible de prévoir plus de deux lames 14, par exemple quatre lames : deux de chaque côté d'un bord de la plateforme 9.

## Revendications

1. Dispositif (13) de maintien et libération d'un engin (1) téléopéré sur un véhicule (8), le dispositif comprenant une plateforme (9) apte à être portée par le véhicule, dispositif ***caractérisé en ce qu*'**il comprend au moins deux lames (14) fixées sur la plateforme par une de leurs extrémités, les lames délimitant entre elles un espace de réception (16) à l'intérieur duquel l'engin (1) est destiné à se positionner dans sa totalité, l'espace de réception (16) étant tel que, lors de l'utilisation du dispositif avec l'engin, la totalité de l'engin (1) se loge à l'intérieur de l'espace de réception (16), chaque lame étant reliée à un moyen de manoeuvre (17) permettant d'écarter ou de rapprocher les extrémités libres des lames (14) pour retenir l'engin dans l'espace de réception (16) ou le libérer.

2. Dispositif de maintien et libération d'un engin téléopéré selon la revendication 1, **caractérisé en ce que** le moyen de manoeuvre (17) a pour effet d'écarter les extrémités libres des lames (14) pour libérer l'engin (1).

3. Dispositif de maintien et libération d'un engin téléopéré selon la revendication 2, **caractérisé en ce que** les lames (14) sont des lames souples qui sont à l'état de repos rapprochées les unes des autres de façon à maintenir l'engin (1), le moyen de manoeuvre (17) ayant pour effet d'écarter les lames (14) pour libérer l'engin.

4. Dispositif de maintien et libération d'un engin téléopéré selon la revendication 3, **caractérisé en ce que** la plateforme 9 comporte une partie fixe sur laquelle sont fixées les lames et une partie mobile qui est destinée à recevoir l'engin et peut se déplacer par rapport à la partie fixe, le moyen de manoeuvre comportant la partie mobile de la plateforme dont un bord externe provoque lors de son déplacement l'écartement élastique des lames.

5. Dispositif de maintien et libération d'un engin téléopéré selon la revendication 1, **caractérisé en ce que** les lames (14) sont des lames souples et le moyen de manoeuvre (17) comprend au moins un moyen de traction (26) relié à chaque lame (14) au voisinage de son extrémité libre, le moyen de traction (26) provoquant lorsqu'il est actionné le passage d'une première position dans laquelle la lame (14) n'est pas déformée à une seconde position dans laquelle la lame (14) est déformée par flexion et comporte alors une partie bombée (14a) qui s'introduit dans l'espace de réception (16) de façon à pouvoir venir en appui contre l'engin (1).

6. Dispositif de maintien et libération d'un engin téléopéré selon la revendication 5, **caractérisé en ce que** le moyen de traction (26) comporte au moins un câble solidaire de chaque lame (14), câble dont une extrémité est reliée à un moyen d'entraînement (27).

7. Dispositif de maintien et libération d'un engin téléopéré selon la revendication 6, **caractérisé en ce que** le moyen d'entraînement (27) comprend au moins un tambour enrouleur.

8. Dispositif de maintien et libération d'un engin téléopéré selon la revendication 7, **caractérisé en ce que** le ou les tambours enrouleurs (27) sont coaxiaux et disposés à égales distances des différentes lames (14).

9. Dispositif de maintien et libération d'un engin téléopéré selon la revendication 6, **caractérisé en ce que** le moyen d'entraînement (27) comprend un coulisseau auquel sont fixés les câbles (26) et qui peut se translater suivant une direction perpendiculaire à la plateforme (9).

10. Dispositif de maintien et libération d'un engin téléopéré selon une des revendications 1 à 9, **caractérisé en ce qu'**il comprend de quatre à huit lames (14) régulièrement réparties angulairement.

11. Dispositif de maintien et libération d'un engin téléopéré selon une des revendications 1 à 10, **caractérisé en ce que** les lames (14) sont conductrices ou bien recouvertes d'un matériau conducteur (29) au niveau de leur partie qui est destinée à venir en contact avec un dépôt conducteur complémentaire (30) porté par l'engin (1).

12. Dispositif de maintien et libération d'un engin téléopéré selon la revendication 11, **caractérisé en ce que** la face supérieure de la plateforme (9) comporte au moins un revêtement conducteur (31) destiné à coopérer avec un contact (32) porté par l'engin (1).

## Patentansprüche

1. Halte- und Lösevorrichtung (13) eines ferngesteuerten Geräts (1) auf einem Fahrzeug (8), wobei die Vorrichtung eine Plattform (9) umfasst, die imstande ist, von dem Fahrzeug getragen zu werden, wobei die Vorrichtung **dadurch gekennzeichnet ist, dass** sie mindestens zwei auf der Plattform durch eines ihrer Enden befestigte Lamellen (14) umfasst, wobei die Lamellen zwischen sich einen Empfangsraum (16) begrenzen, in dessen Inneren das Gerät (1) bestimmt ist, sich in seiner Gesamtheit zu positionieren, wobei der Empfangsraum (16) derart ist, dass sich bei der Benutzung der Vorrichtung mit dem Gerät die Gesamtheit des Geräts (1) im Inneren des Empfangsraums (16) unterbringt, wobei jede Lamelle mit einem Manövriermittel (17) verbunden ist, das erlaubt, die freien Enden der Lamellen (14) abzuspreizen oder anzunähern, um das Gerät in dem Empfangsraum (16) zu halten oder es zu lösen.

2. Halte- und Lösevorrichtung eines ferngesteuerten Geräts nach Anspruch 1, **dadurch gekennzeichnet, dass** das Manövriermittel (17) zur Wirkung hat, die freien Enden der Lamellen (14) abzuspreizen, um das Gerät (1) zu lösen.

3. Halte- und Lösevorrichtung eines ferngesteuerten Geräts nach Anspruch 2, **dadurch gekennzeichnet, dass** die Lamellen (14) elastische Lamellen sind, die im Ruhezustand einander derart angenähert sind, dass das Gerät (1) gehalten wird, wobei das Manövriermittel (17) zur Wirkung hat, die Lamellen (14) abzuspreizen, um das Gerät zu lösen.

4. Halte- und Lösevorrichtung eines ferngesteuerten Geräts nach Anspruch 3, **dadurch gekennzeichnet, dass** die Plattform (9) einen festen Teil aufweist, auf dem die Lamellen befestigt sind, und einen beweglichen Teil, der dazu bestimmt ist, das Gerät zu empfangen und der in Bezug auf den festen Teil verlagerbar ist, wobei das Manövriermittel den beweglichen Teil der Plattform aufweist, von dem ein äußerer Rand bei seiner Verlagerung die elastische Beabstandung der Lamellen bewirkt.

5. Halte- und Lösevorrichtung eines ferngesteuerten Geräts nach Anspruch 1, **dadurch gekennzeichnet, dass** die Lamellen (14) elastische Lamellen sind und das Manövriermittel (17) mindestens ein Zugmittel (26) umfasst, das mit jeder Lamelle (14) in der Nähe ihres freien Endes verbunden ist, wobei das Zugmittel (26), wenn es betätigt wird, den Übergang aus einer ersten Position, in welcher die Lamelle (14) nicht verformt ist, in eine zweite Position bewirkt, in welcher die Lamelle (14) durch Biegen verformt ist, bewirkt, und dann einen bauchigen Teil (14a) aufweist, der sich in den Empfangsraum (16) derart einfügt, dass er in Abstützung an dem Gerät (1) gelangt.

6. Halte- und Lösevorrichtung eines ferngesteuerten Geräts nach Anspruch 5, **dadurch gekennzeichnet, dass** das Zugmittel (26) mindestens ein Kabel aufweist, das mit jeder Lamelle (14) fest verbunden ist, wobei von dem Kabel ein Ende mit einem Antriebsmittel (27) verbunden ist.

7. Halte- und Lösevorrichtung eines ferngesteuerten Geräts nach Anspruch 6, **dadurch gekennzeichnet, dass** das Antriebsmittel (27) mindestens eine Wickeltrommel umfasst.

8. Halte- und Lösevorrichtung eines ferngesteuerten Geräts nach Anspruch 7, **dadurch gekennzeichnet, dass** die Wickeltrommel(n) (27) koaxial und in gleichen Abständen von den unterschiedlichen Lamellen (14) angeordnet sind.

9. Halte- und Lösevorrichtung eines ferngesteuerten Geräts nach Anspruch 6, **dadurch gekennzeichnet, dass** das Antriebsmittel (27) ein Gleitstück umfasst, an dem die Kabel (26) befestigt sind und das sich gemäß einer zu der Plattform (9) senkrechten Richtung verschieben kann.

10. Halte- und Lösevorrichtung eines ferngesteuerten Geräts nach einem der Ansprüche 1 bis 9, **dadurch gekennzeichnet, dass** sie vier bis acht winklig gleichmäßig verteilte Lamellen (14) umfasst.

11. Halte- und Lösevorrichtung eines ferngesteuerten Geräts nach einem der Ansprüche 1 bis 10, **dadurch gekennzeichnet, dass** die Lamellen (14) leitend oder auch mit einem leitenden Material (29) im Bereich ihres Teils beschichtet sind, der bestimmt ist, mit einer komplementären leitenden Ablagerung (30) in Kontakt zu kommen, die von dem Gerät (1) getragen wird.

12. Halte- und Lösevorrichtung eines ferngesteuerten Geräts nach Anspruch 11, **dadurch gekennzeichnet, dass** die obere Fläche der Plattform (9) mindestens eine leitende Beschichtung (31) aufweist, die bestimmt ist, mit einem Kontakt (32) zusammenzuwirken, der von dem Gerät (1) getragen wird.

## Claims

1. A device (13) for holding and releasing a remotely-controlled machine (1) on a vehicle (8), the device comprising a platform (9) able to be carried by the vehicle, the device being **characterised in that** it comprises at least two blades (14) attached on the platform by one of their ends, the blades delimiting therebetween an accommodating space (16) in which the machine (1) is intended to be entirely positioned, the accommodating space (16) being such that, when using the device with the machine, the whole machine (1) is housed within the accommodating space (16), each blade being connected to a manipulating means (17) allowing to move the free ends of the blades (14) away from each other or closer to each other in order to hold the machine within the accommodating space (16) or to release it.

2. The device for holding and releasing a remotely-controlled machine according to claim 1, **characterised in that** the manipulating means (17) moves the free ends of the blades (14) away from each other in order to release the machine (1).

3. The device for holding and releasing a remotely-controlled machine according to claim 2, **characterised in that** the blades (14) are flexible blades which are, at rest, moved closer to each other so as to hold the machine (1), the manipulating means (17) moving the blades (14) away from each other in order to release the machine.

4. The device for holding and releasing a remotely-controlled machine according to claim 3, **characterised in that** the platform 9 includes a fixed part on which the blades are attached and a movable part which is intended to receive the machine and can move with respect to the fixed part, the manipulating means including the movable part of the platform an outer edge of which causes, during a movement thereof, the blades to be resiliently moved away from each other.

5. The device for holding and releasing a remotely-controlled machine according to claim 1, **characterised in that** the blades (14) are flexible blades and the manipulating means (17) comprises at least one pulling means (26) connected to each blade (14) at the vicinity of its free end, the pulling means (26) causing, when operated, the transition from a first position, in which the blade (14) is not deformed, to a second position in which the blade (14) is deformed by bending and includes then a domed part (14a) which is inserted into the accommodating space (16) so as to be able to abut against the machine (1).

6. The device for holding and releasing a remotely-controlled machine according to claim 5, **characterised in that** the pulling means (26) includes at least one cable integral with each blade (14), one end of the cable is connected to a driving means (27).

7. The device for holding and releasing a remotely-controlled machine according to claim 6, **characterised in that** the driving means (27) includes at least one reeling drum.

8. The device for holding and releasing a remotely-controlled machine according to claim 7, **characterised in that** the one or more reeling drums (27) are coaxial and arranged at equal distances from the plurality of blades (14).

9. The device for holding and releasing a remotely-controlled machine according to claim 6, **characterised in that** the driving means (27) includes a slide to which the cables (26) are attached and which can translate along a direction perpendicular to the platform (9) .

10. The device for holding and releasing a remotely-controlled machine according to one of claims 1 to 9, **characterised in that** it includes from four to eight blades (14) that are evenly angularly distributed.

11. The device for holding and releasing a remotely-controlled machine according to one of claims 1 to 10, **characterised in that** the blades (14) are conductive or covered with a conductive material (29) at their part which is intended to contact an additional conductive deposit (30) carried by the machine (1).

12. The device for holding and releasing a remotely-controlled machine according to claim 11, **characterised in that** the upper face of the platform (9) includes at least one conductive coating (31) intended to cooperate with a contact (32) carried by the machine (1).
